# EUROPEAN PATENT APPLICATION

(11) **EP 2 216 665 A1**
(43) Date of publication of application: **11.08.2010**
(21) Application number: 09001721.1
(22) Date of filing: 06.02.2009
(51) Int. Cl.: G02B 6/38, G02B 6/44

(54) **Fiber optic distribution device and fiber optic network including the same**

(71) Applicant: CCS Technology Inc., Wilmington, DE 19803 (US)
(72) Inventor: Sokolowski, Bartlomiej, 97-300 Piotrkow Trybunalski (PL); Ciechomski, Tomasz, 99-400 Lowicz (PL); Fabrykowski, Grzegorz, 95-010 Strykow (PL); Tosik, Grzegorz, 98-113 Buczek (PL)
(74) Representative: Sturm, Christoph

(57) **Abstract**

A fiber optic distribution device (10), comprising: a housing (11), said housing (11) providing at least one inlet opening (14, 14') for an incoming fiber optic cable having micromodules and at least one outlet opening (15, 15') for an outgoing fiber optic cable having a micromodules, whereby each micromodule comprises a number of optical fibers surrounded by a protection tube; a splice tray (21) positioned inside the housing (11), whereby the splice tray (21) carries at least one splice between an optical fiber of a micromodule of said incoming fiber optic cable and an optical fiber of a pigtail being preassembled at one end with a fiber optic connector (26); at least one adapter (27) having a first adapter port (28) being accessible from the interior of the housing (11) for receiving the fiber optic connector (26) of the pigtail and having a second adapter port (29) being accessible from the exterior of the housing (11) for receiving a fiber optic connector (30) of an optical network terminal cable running to a subscriber (31); at least one disconnect protector (32) enclosing at least the first adapter port (28) and the second adapter port (29) of an adapter (27) together with the fiber optic connectors (26, 30) received by said adapter ports (28, 29) thereby preventing the fiber optic connectors received by said adapter ports (28, 29) from disconnection.

## Description

The patent application relates to a fiber optic distribution device for indoor applications, especially to a wall box. Further on, the patent application relates to a fiber optic network comprising at least one such fiber optic distribution device.

In the world of the ever-increasing need for broadband bandwidth optical cables have become the main part of telecommunication networks. Optical cables can transmit voice signals, data signals and video signals for very long distances with very high speed. Developments of optic telecommunication networks allow the connection of the end user directly to the optical fiber. This kind of network technology known as FTTH technology (fiber to the home) requires extending an "all optical" communication network closer to the subscribers. As a result such telecommunication networks include large number distribution points from a distribution cable to an end user or subscriber.

One of the key parts of the FTTH network is the last mile connection which often is an indoor installation. Different kind of buildings like multi dwelling units and block of flats require complicated cabling systems which might mean that there are many separated cables, each one to connect one subscriber. Installation of many cables which provide the connection between a main distribution point (which usually is located in the basement or in another place of the building) and the end user may cause many problems with routing through the wall or levels of the building. As a result, such installations consume a lot of time and costs.

Another way to provide the connection between the main distribution point and the end user or subscriber is using an optical cable comprising a riser cable with branched off tether cables, whereby the riser cable is to be connected to the main distribution point via a distribution cable, and whereby the tether cables are to be connected to subscribers via a drop cables. The installation of an optical cable comprising a riser cable and branched off tether cables to provide connection between the main distribution point and the subscribers is done by a highly skilled field technician using standard fiber optic distribution devices which results in high costs of installation.

Against this background, a novel fiber optic distribution device is provided allowing easy installation in order to reduce costs for installation. Further on, a novel fiber optic network including such fiber optic distribution devices is provided.

A novel fiber optic distribution device is defined claim 1. According to claim 1, the fiber optic distribution device comprises a housing, said housing providing at least one inlet opening for an incoming fiber optic cable having micromodules and at least one outlet opening for an outgoing fiber optic cable having a micromodules, whereby each micromodule comprises a number of optical fibers surrounded by a protection tube; the fiber optic distribution device further comprises a splice tray positioned inside the housing, whereby the splice tray carries at least one splice between an optical fiber of a micromodule of said incoming fiber optic cable and an optical fiber of a pigtail being preassembled at one end with a fiber optic connector; the fiber optic distribution device further comprises at least one adapter having a first adapter port being accessible from the interior of the housing for receiving the fiber optic connector of a pigtail and having a second adapter port being accessible from the exterior of the housing for receiving a fiber optic connector of an optical network terminal cable running to a subscriber; and the fiber optic distribution device further comprises at least one disconnect protector enclosing at least the first adapter port and the second adapter port of an adapter together with the fiber optic connectors received by said adapter ports thereby preventing the fiber optic connectors received by said adapter from disconnection.

Another novel fiber optic distribution device is defined claim 6. According to claim 6 the fiber optic distribution device comprises a housing, said housing providing at least one inlet opening for an incoming fiber optic cable having micromodules and at least one outlet opening for an outgoing fiber optic cable having a micromodules, whereby each micromodule comprises a number of optical fibers surrounded by a protection tube, and whereby fibers of the incoming fiber optic cable are preconnectorized with fiber optic connectors; the fiber optic distribution device further comprises at least one adapter having a first adapter port being accessible from the interior of the housing for receiving a fiber optic connector of the preconnectorized incoming fiber optic cable and having a second adapter port being accessible from the exterior of the housing for receiving a fiber optic connector of an optical network terminal cable running to a subscriber; the fiber optic distribution device further comprises at least one disconnect protector enclosing at least the first adapter port and the second adapter port of an adapter together with the fiber optic connectors received by said adapter ports thereby preventing the fiber optic connectors received by said adapter ports from disconnection

Another novel fiber optic distribution device is defined claim 8. According to claim 8 the fiber optic distribution device comprises a housing, said housing providing at least one inlet opening for an incoming fiber optic cable having a first number of micromodules and at least one outlet opening for an outgoing fiber optic cable having a second number of micromodules, whereby each micromodule comprises a number of optical fibers surrounded by a protection tube; whereby the second number of micromodules of said outgoing fiber optic cable in smaller than the first number of micromodules of said incoming fiber optic cable; and whereby the optical fibers of the second number of micromodules of said outgoing fiber optic cable are uncut optical fibers of the first number of micromodules of said incoming fiber optic cable.

The fiber optic distribution devices allow an easy installation and the reduction of costs for installation.

The features of the fiber optic distribution device as defined in claim 1 can be combined with the features of the fiber optic distribution device as defined in claim 6 and/or as defined in claim 8.

A novel fiber optic network is defined claim 10. According to claim 10 the fiber optic network comprises an optical cable having a riser cable and at least one tether cable branched off from said riser cable; said riser cable comprising a cable jacket surrounding a plurality of optical fiber bundles, a furcation adapter mounted to an end of said riser cable, said furcation adapter splitting out the optical fibers of said riser cable in a way that each of said optical fibers of said riser cable is surrounded by an individual protection tube and that each of said optical fibers of said riser cable can be connected to an optical fiber of a distribution cable, and mid span access locations, wherein in the region of at least one of these mid span access locations at least one tether cable is branched off from said riser cable; each of said tether cables comprising unspliced optical fibers of said riser cable; the fiber optic network further comprises at least one first fiber optic distribution device carrying connection points in order to connect optical fibers of a tether cable to optical fibers of a drop cable; the fiber optic network further comprises at least one second fiber optic distribution device carrying connection points in order to connect optical fibers of a drop cable to optical fibers of a optical network terminal cable running to a subscriber.

Another novel fiber optic network is defined claim 14. According to claim 14 the fiber optic network comprises at least one drop cable having a cable jacket surrounding a plurality of optical fibers, and a furcation adapter mounted to an end of said drop cable, said furcation adapter splitting out the optical fibers of said drop cable in a way that each of said optical fibers of said drop cable is surrounded by an individual protection tube and that each of said optical fibers of said drop cable can be connected to an optical fiber of a distribution cable; the fiber optic network further comprises at least one fiber optic distribution device carrying connection points in order to connect optical fibers of the drop cable to optical fibers of a optical network terminal cable running to a subscriber.

Preferred embodiments of the fiber optic distribution device and fiber optic network are given in the dependent claims and the description below. Exemplary embodiments will be explained in more detail with reference to the drawing, in which:
- figure 1: shows an exploded view of a preferred embodiment of a fiber optic distribution device;
- figure 2: shows a detail of the fiber optic distribution device according fig- ure 1;
- figure 3: shows the detail of figure 2 in an exploded view;
- figure 4: shows an embodiment of a fiber optic network comprising fiber optic distribution devices according figure 1;
- figure 5: shows a detail of the fiber optic network according figure 4.

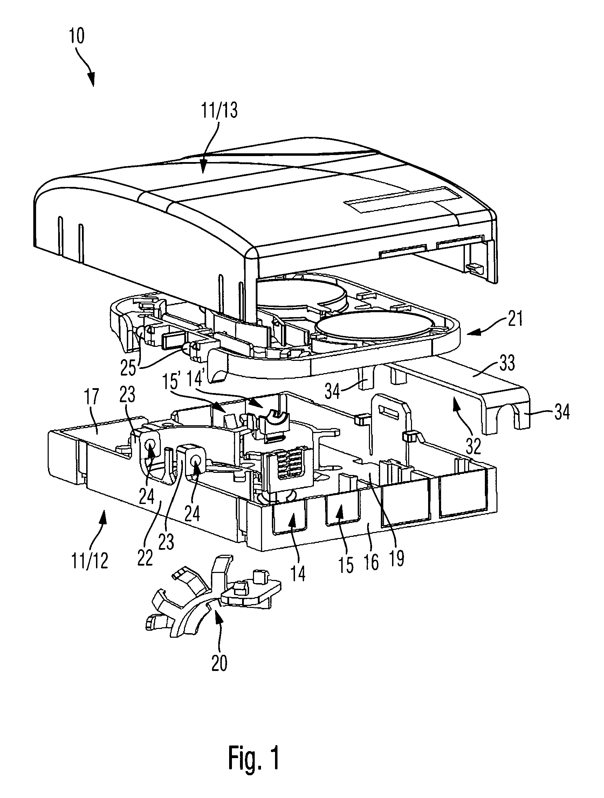

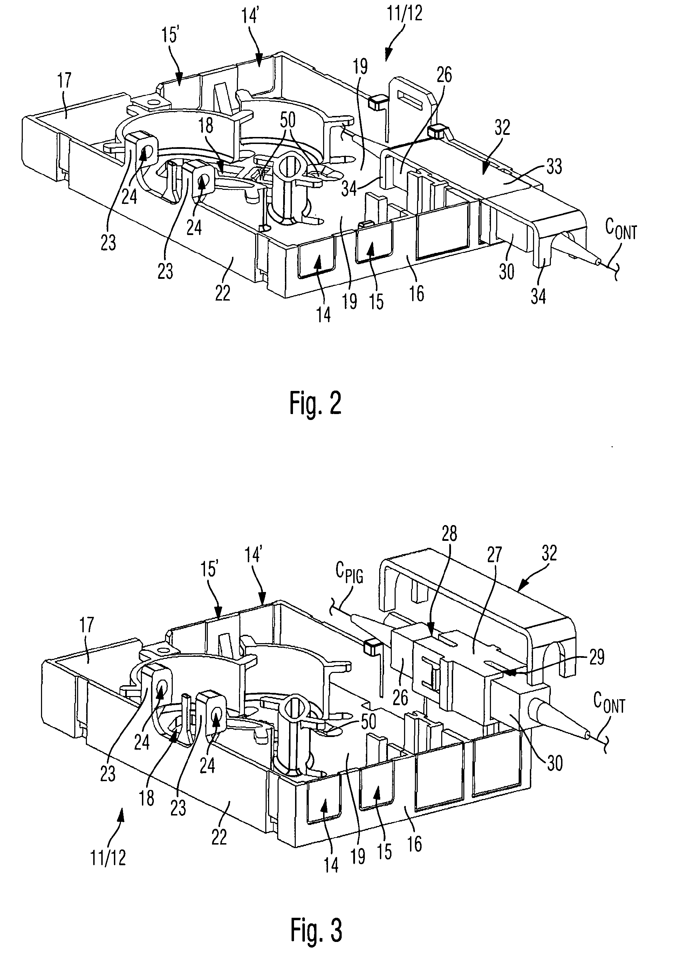

Figures 1 to 3 show a preferred embodiment of a fiber optic distribution device 10 for indoor applications. The fiber optic distribution device 10 comprises a housing 11 having a base part 12 and a cover part 13. The base part 12 and the cover part 13 of the housing 11 define an interior of the housing 11. The base part 12 and the cover part 13 of the housing 11 can be coupled together.

The housing 11 provides at least one inlet opening 14, 14' for an incoming fiber optic cable C_{IN} entering into the interior of the housing 11 from the exterior of the same and at least one outlet opening 15, 15' for an outgoing fiber optic cable C_{OUT} entering into the exterior of the housing 11 from the interior of the same.

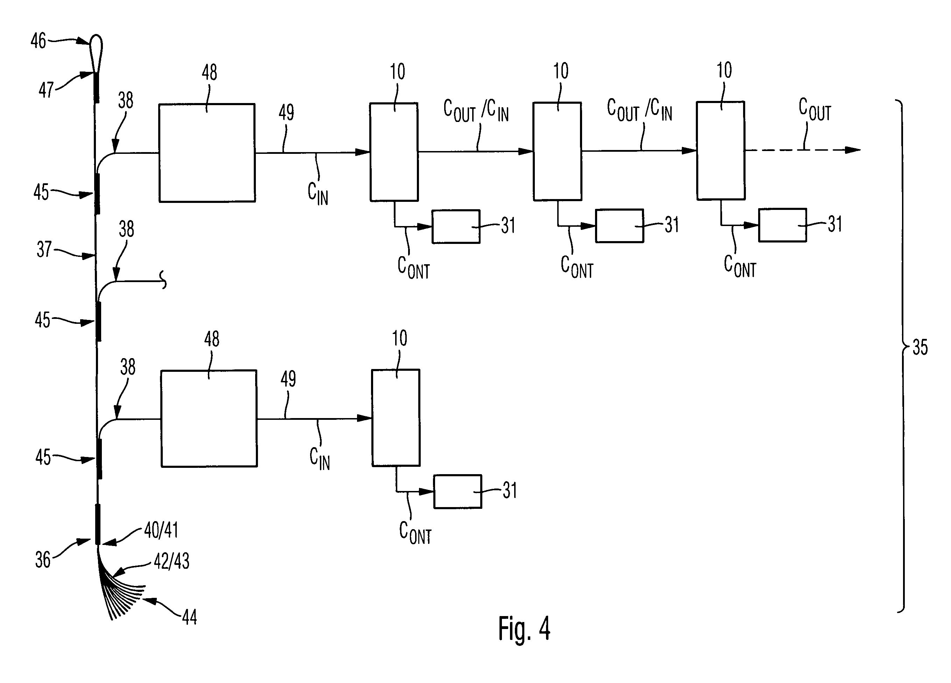

The incoming fiber optic cable C_{IN} and the outgoing fiber optic cable C_{OUT} are both not shown in figures 1 to 3 but in figure 4. The incoming fiber optic cable C_{IN} and the outgoing fiber optic cable C_{OUT} comprise both a number micromodules, whereby each micromodule comprises a number of optical fibers surrounded by a protection tube.

The housing 11 of the fiber optic distribution device 10 according to the embodiment of figures 1 to 3 comprises two inlet opening 14, 14' and two outlet opening 15, 15'. The inlet opening 14 and the outlet opening 15 are assigned to a first side wall of the housing 11, namely to a first side wall 16 of the base part 12 of the housing 11. The inlet opening 14' and the outlet opening 15' are assigned to a second, opposite side wall 17 of the base part 12 of the housing 11.

The inlet opening 14, 14' and outlet opening 15, 15' are prior to installation closed by removable sections of the respective side walls 16 and 17. During installation these sections can be removed to open said inlet opening 14, 14' and said outlet openings 15, 15' as needed.

An additional opening 18, which can be used as inlet opening and/or as outlet opening, is assigned to a bottom wall 19 of the base part 12 of the housing 11, whereby figure 1 shows a strain relief element 20 for an incoming cable or outgoing cable guided through said opening 18 of said bottom wall 19.

The fiber optic distribution device 10 comprises a splice tray 21 being positioned inside and therefore in the interior of the housing 11. The splice tray 21 is swingable attached the housing 11, namely to a side wall 22 of the base part 12 extending between the side walls 16 and 17 to which the inlet openings 14, 14' and outlet opening 15, 15' are assigned. The side wall 22 comprises protrusions 23 having recesses 24 for receiving pins 25 of the splice tray 21 thereby forming a hinge between the splice tray 21 and the base part 12 of the housing 11 running in parallel to the side wall 22 of the base part 12.

The splice tray 21 carries at least one splice between an optical fiber of a micromodule of an incoming fiber optic cable C_{IN} and an optical fiber of a pigtail C_{PIG} being preassembled at the opposite end of the splice with a fiber optic connector 26.

The fiber optic distribution device 10 comprises at least one adapter 27. In the shown embodiment, the fiber optic distribution device 10 is able to receive two adapters 27.

The or each adapter 27 comprises a first adapter port 28 being accessible from the interior of the housing 11 for receiving the fiber optic connector 26 of the pigtail C_{PIG}. The or each adapter 27 further comprises a second adapter port 29 being accessible from the exterior of the housing 11 for receiving a fiber optic connector 30 of an optical network terminal cable C_{ONT} running to a subscriber 31.

The fiber optic distribution device 10 comprises at least one disconnect protector 32. To each adapter 27 there is assigned one disconnect protector 32. The disconnect protector 32 encloses at least the first adapter port 28 and the second adapter port 29 of an adapter 27 together with the fiber optic connectors 26 and 30 received by said adapter ports 28 and 29 thereby preventing the fiber optic connectors 26 and 28 received by said adapter ports 28 and 29 from disconnection.

Said disconnect protector 32 is U-shaped having a substantially flat middle section 33 and two end sections 34 being warped against said middle section 33, whereby said end sections 34 enclose the first adapter port 28 and the second adapter port 29 of an adapter 27 together with the fiber optic connectors 26 and 30 received by said adapter ports 28 and 29. The middle section 33 extends from the interior of the housing 11 to the exterior of the housing 11 between the fiber optic connectors 26 and 30 received by said adapter ports 28 and 29.

The fiber optic distribution device 10 is preferably used as a wallbox mountable to a wall. Mounting holes 50 provided in the bottom wall 19 of the base part 12 of the housing 11 can receive mounting means for fastening the fiber optic distribution device 10 at the wall.

The incoming fiber optic cable C_{IN} comprises a first number of micromodules and the outgoing fiber optic cable C_{OUT} comprises a second number of micro-modules. The second number of micromodules of said outgoing fiber optic cable C_{OUT} in smaller than the first number of micromodules of said incoming fiber optic cable C_{IN}. The optical fibers of the second number of micromodules of said outgoing fiber optic cable C_{OUT} are uncut optical fibers of the first number of micromodules of said incoming fiber optic cable C_{IN}.

It should be noted that the optical fibers of the incoming fiber optic cable C_{IN} could be preconnectorized with fiber optic connectors. If this is the case, the first adapter port 28 of adapter 27 being accessible from the interior of the housing will receive a fiber optic connector of the preconnectorized incoming fiber optic cable C_{IN} and the second adapter port 29 being accessible from the exterior of the housing 11 will receive a fiber optic connector 30 of an optical network terminal cable C_{ONT} running to a subscriber 31. In this case the splice tray 21 is not needed or can be bypassed.

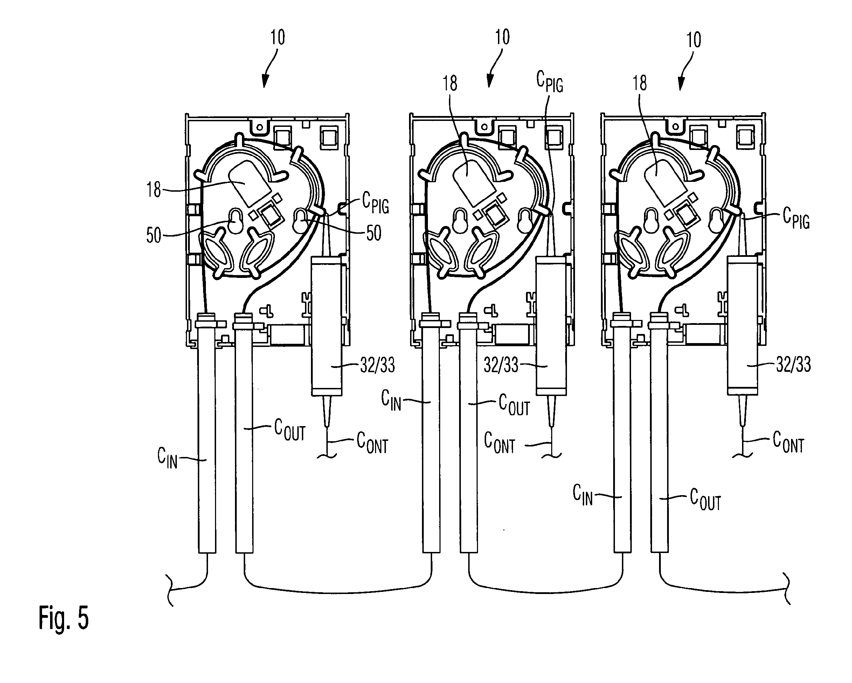

Figure 4 and 5 show a schematic view of a preferred embodiment of a fiber optic network 35 including such fiber optic distribution devices 10. Figure 4 shows as part of the fiber optic network 35 a cable assembly 36 which comprises a riser cable 37 and tether cables 38 branched off from said riser cable 37.

The riser cable 37 of the fiber optic network 35 comprises a cable jacket 39 surrounding a plurality of optical fiber bundles (not shown), wherein each of said optical fiber bundles comprises preferably a buffer tube surrounding a plurality of individual optical fibers. The riser cable 37 further comprises a furcation adapter 40 mounted to a first end 41 of said riser cable 37, said furcation adapter 40 splitting out individual optical fibers 42 of said riser cable 37 in a way that each of said individual optical fibers 42 of said riser cable 37 is surrounded by an individual protection tube 43 and that each of said individual optical fibers 42 of said riser cable 42 can be connected to an optical fiber of a distribution cable (not shown).

The individual optical fibers 42 of said riser cable 37 are preferably connectorized with fiber optic connectors 44 in order to connect each of said individual optical fibers 42 of said riser cable 37 to an optical fiber of said distribution cable at a main distribution point.

The riser cable 37 of the fiber optic network 35 further comprises mid span access locations 45, wherein in the region of at least one of these mid span access locations 45 at least one tether cable 38 is branched off from said riser cable 37.

According to the embodiment of figure 4, the cable assembly 36 comprises three mid span access locations 45, whereby at each mid span access location 45 one tether cable 38 is branched off from said riser cable 37. Each of said tether cables 38 of the cable assembly 36 comprises unspliced optical fibers of said riser cable 37.

The riser cable 37 of the fiber optic network 35 further comprises a pulling member 46 for pulling the riser cable 37 together with the tether cables 38 through a cable duct during installation. The pulling member 46 is assigned to a second end 47 of said riser cable 37. The pulling member 15 is preferably an integral element of the riser cable 37.

The fiber optic network 35 further comprises at least one first fiber optic distribution device 48 carrying connection points, especially splices, in order to connect optical fibers of a tether cable 38 to optical fibers of a drop cable 49. To each tether cable 38 there is assigned one of said first fiber optic distribution devices 48, each tether cable 38 being guided into said respective first fiber optic distribution device 48.

The drop cable 49 emerging from the first fiber optic distribution device 48 corresponds to the incoming fiber optic cable C_{IN} entering in a second distribution fiber optic distribution device 10, namely into the second distribution fiber optic distribution device 10 following next to the first fiber optic distribution device 48.

The fiber optic network 35 further comprises at least one of said second fiber optic distribution device 10 carrying connection points, especially splices, in order to connect optical fibers of a drop cable 49 to optical fibers of at least one optical network terminal cable C_{ONT} each running to a subscriber 31. The or each second fiber optic distribution device 10 corresponds to the fiber optic distribution device 10 shown in figures 1 to 3.

The optical fibers of each drop cable 49 are guided to at least one second fiber optic distribution device 10, the or each second fiber optic distribution device 10 carrying splices in order to connect the optical fibers of said drop cable 49 to optical fibers of at least one optical network terminal cable C_{ONT} running to a subscriber 31.

According to figures 4 and 5 the optical fibers of the drop cable 49 being connected to the optical fibers of the upper tether cable 38 are guided to a cascade of second fiber optic distribution devices 10, whereby according to figure 5 within each second fiber optic distribution devices 10 one optical fiber of the drop cable 49 is connected via an optical fiber of a pigtail C_{PIG} to an optical fiber of an optical network terminal cable C_{ONT}. The other optical fibers of the drop cable 49 are uncut and exit the respective second fiber optic distribution devices 10 within the respective outgoing fiber optic cable C_{OUT}.

As mentioned above, the optical fibers of the of the drop cables 49, the incoming fiber optic cables C_{IN} and outgoing fiber optic cables C_{OUT} are organized as micromodules, whereby each drop cable 49, each incoming fiber optic cable C_{IN} and each outgoing fiber optic cable C_{OUT} comprises a number of micromodules, and whereby each micromodule comprises a number optical fibers surrounded by a protection tube.

It should be noted that it is possible that in figure 4 drop cables (not shown) having optical fibers run directly between the main distribution point, where they are connected to the distribution cable, and the fiber optic distribution devices 10.

In this case, there will be no riser cable, tether cables and fiber optic distribution devices 48 between the main distribution point and the fiber optic distribution devices 10. Such a drop cable could be preconnectorized with fiber optic connectors for direct connection to a fiber optic connector 30 of an optical network terminal cable C_{ONT} or an optical fiber of a such a drop cable could be connected to a fiber optic connector 30 of a an optical network terminal cable C_{ONT} via pigtail C_{PIG}.

### List of reference numerals

- 10: fiber optic distribution device
- 11: housing
- 12: base part
- 13: cover part
- 14, 14': inlet opening
- 15, 15': outlet opening
- 16: side wall
- 17: side wall
- 18: opening
- 19: bottom wall
- 20: strain relief element
- 21: splice tray
- 22: side wall
- 23: protrusion
- 24: recess
- 25: pin
- 26: fiber optic connector
- 27: adapter
- 28: first adapter port
- 29: second adapter port
- 30: fiber optic connector
- 31: subscriber
- 32: disconnect protector
- 33: middle section
- 34: end section
- 35: fiber optic network
- 36: cable assembly
- 37: riser cable
- 38: tether cable
- 39: cable jacket
- 40: furcation adapter
- 41: first end
- 42: individual optical fiber
- 43: individual protection tube
- 44: fiber optic connector
- 45: mid span access location
- 46: pulling member
- 47: second end
- 48: first fiber optic distribution device
- 49: drop cable
- 50: mounting hole

## Claims

1. A fiber optic distribution device (10), comprising:
a housing (11), said housing (11) providing at least one inlet opening (14, 14') for an incoming fiber optic cable (C_{IN}) having micromodules and at least one outlet opening (15, 15') for an outgoing fiber optic cable (C_{OUT}) having a micromodules, whereby each micromodule comprises a number of optical fibers surrounded by a protection tube;
a splice tray (21) positioned inside the housing (11), whereby the splice tray (21) carries at least one splice between an optical fiber of a micromodule of said incoming fiber optic cable (C_{IN}) and an optical fiber of a pigtail (C_{PIG}) being preassembled at one end with a fiber optic connector (26);
at least one adapter (27) having a first adapter port (28) being accessible from the interior of the housing (11) for receiving the fiber optic connector (26) of the pigtail (C_{PIG}) and having a second adapter port (29) being accessible from the exterior of the housing (11) for receiving a fiber optic connector (30) of an optical network terminal cable (C_{ONT}) running to a subscriber (31);
at least one disconnect protector (32) enclosing at least the first adapter port (28) and the second adapter port (29) of an adapter (27) together with the fiber optic connectors (26, 30) received by said adapter ports (28, 29) thereby preventing the fiber optic connectors received by said adapter ports (28, 29) from disconnection.

2. The fiber optic distribution device as claimed in claim 1, **characterised in that** the or each disconnect protector (32) comprises a substantially flat middle section (33) and two end sections (34) being warped against said middle section (33), whereby said end sections (34) enclosing the first adapter port (28) and the second adapter port (29) of an adapter (27) together with the fiber optic connectors (26, 30) received by said adapter ports (28, 29).

3. The fiber optic distribution device as claimed in claim 2, **characterised in that** the middle section (33) extends from the interior of the housing (11) to the exterior of the housing (11) between fiber optic connectors (26, 30) received by said adapter ports (28, 29).

4. The fiber optic distribution device as claimed in one of claims 1 to 3, **characterised in that** the or each disconnect protector (32) is U-shaped.

5. The fiber optic distribution device as claimed in one of claims 1 to 4, **characterised by** features of claim 6 and/or claim 8.

6. A fiber optic distribution device (10), comprising:
a housing (11), said housing (11) providing at least one inlet opening (14, 14') for an incoming fiber optic cable (C_{IN}) having micromodules and at least one outlet opening (15, 15') for an outgoing fiber optic cable (C_{OUT}) having a micromodules, whereby each micromodule comprises a number of optical fibers surrounded by a protection tube, and whereby fibers of the incoming fiber optic cable (C_{IN}) are preconnectorized with fiber optic connectors;
at least one adapter (27) having a first adapter port (28) being accessible from the interior of the housing (11) for receiving a fiber optic connector of the preconnectorized incoming fiber optic cable (G_{IN}) and having a second adapter port (29) being accessible from the exterior of the housing (11) for receiving a fiber optic connector (30) of an optical network terminal cable (C_{ONT}) running to a subscriber (31);
at least one disconnect protector (32) enclosing at least the first adapter port (28) and the second adapter port (29) of an adapter (27) together with the fiber optic connectors received by said adapter ports (28, 29) thereby preventing the fiber optic connectors received by said adapter ports (28, 29) from disconnection.

7. The fiber optic distribution device as claimed in claim 6, **characterised by** features of one of claim 1 to 4 and/or claim 8.

8. A fiber optic distribution device,
comprising a housing (11), said housing (11) providing at least one inlet opening (14, 14') for an incoming fiber optic cable (C_{IN}) having a first number of micromodules and at least one outlet opening (15, 15') for an outgoing fiber optic cable (C_{OUT}) having a second number of micromodules, whereby each micromodule comprises a number of optical fibers surrounded by a protection tube;
whereby the second number of micromodules of said outgoing fiber optic cable (G_{OUT}) in smaller than the first number of micromodules of said incoming fiber optic cable (C_{IN}),
whereby the optical fibers of the second number of micromodules of said outgoing fiber optic cable (G_{OUT}) are uncut optical fibers of the first number of micromodules of said incoming fiber optic cable (C_{IN}).

9. The fiber optic distribution device as claimed in claim 8, **characterised by** features of one of claims 1 to 4 and/or claim 6.

10. A fiber optic network comprising
an optical cable assembly (36) having a riser cable (37) and at least one tether cable (38) branched off from said riser cable (37);
said riser cable (37) comprising
a cable jacket (38) surrounding a plurality of optical fiber bundles,
a furcation adapter (40) mounted to an end (41) of said riser cable (37), said furcation adapter (40) splitting out the optical fibers of said riser cable (37) in a way that each of said optical fibers of said riser cable (37) is surrounded by an individual protection tube and that each of said optical fibers of said riser cable (37) can be connected to an optical fiber of a distribution cable;
mid span access locations (45), wherein in the region of at least one of these mid span access locations (45) at least one tether cable (38) is branched off from said riser cable (37);
each of said tether cables (38) comprising unspliced optical fibers of said riser cable (37),
at least one first fiber optic distribution device (48) carrying connection points in order to connect optical fibers of a tether cable (38) to optical fibers of a drop cable (49),
at least one second fiber optic distribution device (10) carrying connection points in order to connect optical fibers of a drop cable (49) to optical fibers of a optical network terminal cable (C_{ONT}) running to a subscriber (31), wherein the or each second fiber optic distribution device (10) is **characterised by** features of one of claims 1 to 9.

11. The fiber optic network as claimed in claim 10, **characterised in that** each tether cable (38) is guided to an first fiber optic distribution device (48), said first fiber optic distribution device (48) carrying connection points in order to connect the optical fibers of said tether cable (38) to optical fibers of a drop cable (49).

12. The fiber optic network as claimed in claim 11, **characterised in that** each drop cable (49) is guided to at least one second fiber optic distribution device (10), the or each second fiber optic distribution device (10) carrying connection points in order to connect the optical fibers of said drop cable (49) to optical fibers of a optical network terminal cable (C_{ONT}) running to a subscriber (31).

13. The fiber optic network as claimed in claim 12, wherein optical fibers of each drop cable (49) are guided to a cascade of second fiber optic distribution devices (10).

14. A fiber optic network comprising
at least one drop cable having
a cable jacket surrounding a plurality of optical fibers,
a furcation adapter mounted to an end of said drop cable, said furcation adapter splitting out the optical fibers of said drop cable in a way that each of said optical fibers of said drop cable is surrounded by an individual protection tube and that each of said optical fibers of said drop cable can be connected to an optical fiber of a distribution cable;
at least one fiber optic distribution device (10) carrying connection points in order to connect optical fibers of the drop cable to optical fibers of a optical network terminal cable (C_{ONT}) running to a subscriber (31), wherein the or each second fiber optic distribution device (10) is **characterised by** features of one of claims 1 to 9.
